# EUROPÄISCHE PATENTSCHRIFT

(11) **EP 2 887 535 B1**
(45) Veröffentlichungstag und Bekanntmachung des Hinweises auf die Patenterteilung: **07.02.2018**
(21) Anmeldenummer: 13199339.6
(22) Anmeldetag: 23.12.2013
(51) Int. Cl.: E05F 15/40, E05F 15/603, E05F 15/72, E06B 9/84, H02P 3/08, E05F 15/70

(54) **Antriebs- und Steuersystem für Hubtore**
Drive and control system for raising gates
Système d'entraînement et de commande pour portes relevables

(43) Veröffentlichungstag der Anmeldung: 24.06.2015
(73) Patentinhaber: Gabrijel Rejc GmbH & Co. KG, 84036 Landshut (DE)
(72) Erfinder: Rejc, Gabrijel, 84036 Landshut (DE)
(74) Vertreter: Grünecker Patent- und Rechtsanwälte PartG mbB

(56) Entgegenhaltungen:
- US-A1- 2004 183 677

## Beschreibung

Die vorliegende Erfindung bezieht sich auf Antriebs- und Steuersysteme für Hubtore, insbesondere für schnell laufende Industriehubtore, sowie auf ein Hubtor mit einem derartigen Antriebs- und Steuersystem.
Im Stand der Technik sind Hubtore beispielsweise aus der DE 40 15 214 A1 bekannt, in der ein Hubtor mit einem Lamellenpanzer und einem elektrischen Antriebsmotor offenbart wird. Dieses Hubtor umfasst zwei Führungsbahnen, die an den beiden gegenüberliegenden Seiten der Toröffnung angeordnet sind, und einen Lamellenpanzer mit Lamellen, welche auf Scharnierbändern derart mit Abstand voneinander aufgesetzt sind, dass die Scharnierzapfen innerhalb eines Raumes zwischen den benachbarten Lamellen eingreifen. Es ist ferner offenbart, dass dieses Hubtor als Industriehubtor im Sinne eines Schnelllauftores ausgebildet ist. Solche Hubtore sind als Rolltore oder Spiraltore ausgebildet, die begeh- oder befahrbare Toröffnungen verschließen oder freigeben. Ein Antriebs- und Steuersystem gemäss dem Oberbegriff des Anspruch 1 ist durch US 2004 0183677 A1 offenbart. An Toren, bei denen, um die Durchfahrts- und Durchgangsöffnung freizugeben, das Torblatt vertikal bewegt wird, besteht Gefahr dadurch, dass aufgrund der Schwerkraftbelastung des Torblattes, bei Versagen eines Stell- oder Antriebsgliedes ein unkontrolliertes, gefahrenbringendes Abstürzen des Torblattes nicht ausgeschlossen werden kann. Diese Gefahren sind umso größer, je schneller das Torblatt im regulären Betrieb bewegt wird. Bei sogenannten Schnelllauftoren werden Torblattgeschwindigkeiten von bis zu 4 m/s erreicht, wohingegen die Torblätter bei gewöhnlichen Industriehubtoren mit Geschwindigkeiten von typischerweise 0,2 - 0,3 m/s bewegt werden.
Um die von diesen Toren ausgehenden Gefährdungen zu minimieren, werden aufwändige Maßnahmen ergriffen.
Eine gängige Maßnahme ist, das Torblattgewicht durch Gegengewichte oder Gewichtsausgleichfedern auszubalancieren, um damit ein Ausgleichssystem zu schaffen, dass idealerweise dergestalt ausgeprägt ist, dass das Torblattgewicht in jeder Stellung des Torblattes durch das Ausgleichsystems aufgewogen und dadurch ein gefahrbringender Nachlauf vermieden wird.
Die Praxis zeigt, dass dies nicht in der Art realisiert werden kann, dass der Ausgleich an allen Positionen des Torblattes und nicht über die Lebensdauer hinweg gleichmäßig gegeben sein kann. Bei Zugfedern zum Beispiel ändert sich mit der Zeit die Federcharakteristik, so dass das benötigte Ausgleichsmoment nicht auf Dauer gewährleistet werden kann.

Auch sind Absturzvorrichtungen auf Basis von Fliehkraftauslösung bekannt, die auf Erhöhung der Senkgeschwindigkeit des Torblattes reagieren. Fliehkraftauslösungen reagieren jedoch nur relativ träge und sind daher nur bei geringen Schließgeschwindigkeiten einsetzbar. Bei höheren Schließgeschwindigkeiten wäre der Nachlaufweg des Torblattes gefahrenbringend und die Belastung der mechanischen Bauteile wäre relativ hoch.

Gleiches gilt für sogenannte Getriebebruchsicherungen, die derart aufgebaut sind, dass bei Verlust der Kraftübertragung zwischen den einzelnen Getriebeelementen, Haltebacken in das Hauptzahnrad des Getriebes einfallen.

An herkömmlichen Hubtoren kommen Asynchronmotoren mit Schnecken-, Kegel- und Stirnradgetrieben in Kombination mit mechanischen Bremsen zum Einsatz. Getriebe und Bremsen unterliegen permanentem Verschleiß. Belastungen ergeben sich nicht nur aus dem Normalbetrieb der Toranlagen, sondern vor allem auch durch die bei Gefahrenfällen eingeleiteten Maßnahmen wie Sicherheitsumkehr oder Not-Halt. Sicherheitsumkehren, ausgelöst durch absichernde Sensoren wie Abschaltleisten oder Lichtschranken, müssen innerhalb kürzester Zeit zum Stillstand des Torblattes mit anschließender Umkehr der Torblattrichtung führen, um die auftretenden Berührungskräfte auf menschliche Körperteile zu begrenzen. Not-Halt- Vorgänge führen auf kürzestem Wege zum Halt. Stromausfälle führen zum unverzögerten Soforthalt.

Wie obenstehend erläutert, ist der Stromausfall für die konventionelle Ausführung der Tore die Situation, die für das Getriebe des Torantriebes und die Haltebremse die höchste Belastung darstellt. Die Antriebsenergie ist augenblicklich nicht mehr vorhanden, die im Ruhestromprinzip betätigte Bremse fällt unverzögert ein und muss dabei nicht nur Gravitationskräfte, sondern auch die Bewegungsenergie der Torblattmasse auffangen. Die Belastungen an Getrieben und Wellen, sowie anderer Teile des Tragmittelsystems steigen in quadratischer Funktion der Schließgeschwindigkeit an.

Bremsen, die meist an der Motorwelle angebracht sind, stellen sicher, dass das Torblatt nach Abschalten des Antriebes in Position gehalten wird. Diese im Ruhestromprinzip betätigten Bremsen unterliegen hohen Belastungen, vor allem bei Stromausfall, da sie die Bewegungsenergie des Torblattgewichtes unverzögert und unkontrolliert aufnehmen müssen. Der konstruktive Aufwand für solche sicherheitsrelevante mechanischen Bremsen, die auch einen Stromausfall beherrschbar machen, ist daher entsprechend hoch.

Zudem ist die Bremswirkung derartiger Bremsen von einigen Faktoren abhängig, wie zum Beispiel der Betriebstemperatur oder eventueller Verschmutzung. Typischerweise nimmt die Bremswirkung der Bremsen bei ca. 150°C schlagartig ab. Eine Verschmutzung der Bremsscheiben mit ölhaltigen Substanzen reduziert die Bremswirkung ebenfalls drastisch.
Der Steilbereich von Asynchronmotoren, d.h. das Verhältnis aus Nenndrehzahl und kleinster Drehzahl, bei welcher der Antrieb die Solldrehzahl noch halten kann, ist limitiert. Das erforderliche Kraftmoment steht daher bei geringen Drehzahlen nicht zur Verfügung und auch die Reaktionszeit der Bremse ist zu berücksichtigen, so dass die Bremsen schon vor dem Stillstand aktiviert werden müssen. Die dabei auftretende kinetische Energie, die durch die Bremse aufgenommen werden muss, führt zu hohem Verschleiß.
Bedingt durch diese Belastungen sind die Bremsen mindestens jährlich und abhängig von der Anzahl der Betätigungen zu prüfen. Sicherheitsfachleute empfehlen, Bremsen nach spätestens 2.000 Volllastauslösungen, verursacht durch Not-Halt- Auslösungen oder Stromausfälle, bedingungslos auszutauschen.
Um auch bei Stromausfall die Öffnung des Tores zu ermöglichen, sind die eingesetzter elektromechanischen Haltebremsen mit manuell zu bedienenden Elementen wie Seilzügen, Kurbeln oder Handketten ausgestattet, die bei Betätigung die Haltewirkung der Bremse aufheben. Das Torblatt wird dadurch entweder durch den Gewichtsausgleich angehoben, kann hochgedrückt werden oder wird durch Betätigen einer Kurbel oder Handkette nach oben hin aufgerollt.
In der Regel werden die Asynchronmotoren an Toren über Frequenzumrichter betrieben, die eine möglichst gleichmäßige Beschleunigung des Torblattes ermöglichen. Während der schwerkraftunterliegenden Abwärtsbewegung oder bei Umkehrvorgängen des Torblattes ist der Motor im generatorischen Betrieb. Frequenzumrichter benötigen in der Regel einen sogenannten Bremswiderstand, in dem diese generatorische Energie abgebaut, das heißt ungenutzt in Wärmeenergie umgesetzt wird.

### ZUSAMMENFASSUNG DER ERFINDUNG

Aufgabe der vorliegenden Erfindung ist es, die genannten Nachteile zu überwinden und ein verbessertes Antriebs- und Steuersystem für Hubtore bereitzustellen, um die Absturzgefahr und die Belastung auf Getriebe, Wellen, Bremsen und den Gewichtsausgleich zu reduzieren. Dies wird durch die Merkmale des unabhängigen Anspruchs erreicht. Vorteilhafte Ausführungsformen sind Gegenstand der abhängigen Ansprüche. Es ist der besondere Ansatz der vorliegenden Erfindung, den für den Antrieb herkömmlich verwendeten Asynchronmotor mit angebauter Bremse durch einen Motor zu ersetzen, der unter Verwendung von geeigneten Steuer- und Regeleinrichtungen in der Lage ist, das Torblatt des Hubtores motorisch auf die Geschwindigkeit Null zu verzögern und im Stillstand in dieser Position zu halten.
Gemäß einem ersten Aspekt der vorliegenden Erfindung wird ein Antriebssystem für ein Hubtor mit einem vertikal bewegbaren Torblatt zur Verfügung gestellt. Das Antriebssystem umfasst einen mit dem Torblatt verbindbaren Antriebsmotor, der dazu eingerichtet ist, das Torblatt vertikal zu bewegen und ein Steuersystem zur Ansteuerung des Antriebsmotors. Das Antriebssystem ist dadurch gekennzeichnet, dass der Antriebsmotor bis auf Drehzahl Null herab regelbar ist und
die Steuereinheit dazu eingerichtet ist, beim Eintreten einer Haltbedingung den Antriebsmotor so anzusteuern, dass seine Drehzahl kontrolliert reduziert und damit das Torblatt motorisch abgebremst wird, wobei der Antriebsmotor dazu ausgelegt ist, bei Drehzahl Null ein ausreichendes Drehmoment zu liefern, um das Torblatt an einer augenblicklichen Position zu halten, und das Steuersystem dafür ausgelegt ist, dies auch bei einem Stromausfall zu gewährleisten.
Gemäß einem zweiten Aspekt der vorliegenden Erfindung wird ein Hubtor mit einem vertikal beweglichen Torblatt und einem Antriebssystem gemäß dem ersten Aspekt der Erfindung zur Verfügung gestellt.
Vorteilhafterweise kann der Antriebsmotor direkt, insbesondere getriebelos, mit dem Torblatt koppelbar sein. Dies vermindert konstruktiv aufwändige, verschleiß- und fehleranfällige Getriebeeinheiten. Der Antriebsmotor ist als Synchronmotor ausgebildet. Synchronmotore zeichnen sich durch hohe Regelbarkeit und Belastbarkeit aus. Sie liefern hohe Drehmomente bei geringen Abmessungen, so dass sie wahlweise auch ohne Übersetzungsgetriebe so ausgeführt werden können, dass Ihr Moment für übliche Torblattgewichte ausreicht.
Darüber hinaus können Synchronmotore, im Gegensatz zu üblichen Asynchronmotoren, in Stromregelung betrieben werden, so dass ein geregelter Betrieb bis zur Drehzahl Null gegeben ist und auch noch bei stehendem Antrieb (Drehzahl Null) eine ausreichend hohes Moment erzeugt werden kann, um das Torblatt im Stillstand gegen die Gewichtskraft zu halten. Des Weiteren umfasst das Antriebssystem einen elektrischen Energiespeicher, in Form einer Akkumulator-Einheit, der dazu eingerichtet ist, den Antriebsmotor und die Steuereinheit im Falle eines Stromausfalls mit elektrischer Energie zu versorgen. Vorteilhafterweise kann die Steuereinheit dabei dazu eingerichtet sein, einen Stromausfall zu erkennen und als Nothaltbedingung zu interpretieren, so dass der Antriebsmotor auch bei Stromausfall in der Lage ist, die Geschwindigkeit zu reduzieren und das Torblatt im Stillstand zu halten. Außerdem kann auf diese Weise auf den Gewichtsausgleich des Torblattes verzichtet werden.

Der Synchronantrieb kann wahlweise so ausgelegt werden, dass er das Torblatt auch ohne den Einsatz von Gewichtsausgleichsystemen bewegen kann. Zugleich kann die Leistungsregelung des Synchronantriebs die beim Abbremsen und/oder beim Schließen des Tores frei werdende Energie rekuperieren und zwischenspeichern, beispielsweise in einer Akkumulatoreinheit oder Kondensatoreinheit. Der mit den Gewichtsausgleichsystemen verbundene konstruktive Aufwand kann daher ebenfalls vermindert werden, ohne die Belastung der mechanischen Tragmittel zu erhöhen oder die Sicherheit zu verringern.

Zudem kann die Steuereinheit des Weiteren dazu eingerichtet sein, bei Vorliegen eines Stromausfalls einen Notbetrieb des Hubtors zu ermöglichen, insbesondere den Antriebsmotor für eine Notöffnung des Hubtors anzusteuern. Durch den elektrischen Energiespeicher wird also ein Notbetrieb ermöglicht.

Vorteilhafterweise kann das Antriebssystem des Weiteren eine Leistungsregeleinheit zur Ansteuerung des Antriebsmotors aufweisen, wobei die Leistungsregeleinheit dazu eingerichtet ist, die beim motorischen Abbremsen des Torblatts generierte elektrische Energie zu rekuperieren und den elektrischen Energiespeicher mit der rekuperierten Energie zu laden. Auf diese Weise kann der Antrieb des Hubtors in äußerst energieeffizienter Weise erfolgen, eine Eigenschaft, die Insbesondere bei einem Akku-gestützten Notbetrieb von Bedeutung sein kann.

Vorteilhafterweise kann die Steuereinheit des Weiteren dazu eingerichtet sein, auf Basis eines von dem Positionsgeber gelieferten Signals einen Ist-Wert zu ermitteln, der eine Position oder eine Positionsänderung des Hubtors angibt, und den Antriebsmotor auf Basis eines Vergleichs des Ist-Werts mit einem Soll-Wert anzusteuern. Auf diese Weise ist eine präzise Regelung der Torbewegung möglich. Auch kann anhand des Soll- Ist- Vergleiches bei Abweichung eine Reaktion in Form einer Bewegungsunterbrechung durchgeführt werden.

In einer weiteren vorteilhaften Ausführung kann die Steuereinrichtung die Akkurestladung überwachen und bei Erreichen einer vorgegebenen Untergrenze mit der Restenergie das Torblatt in eine sichere, nicht absturzgefährdete Position gefahren werden. Auch kann eine weitere, als redundante Absicherung vorgesehene Akkueinheit, diese Energie zur Verfügung stellen. In einer alternativen Ausführung kann eine mechanische Bremse die Funktion dieser redundanten Absicherung übernehmen. Ebenfalls kann - in dem Fall, dass das Torblatt für längere Zeit in der Haltposition verharrt - aus Energiespargründen die Bremse wirksam geschaltet werden.

Über Positionsgeberwerte kann überprüft werden, ob die Halteposition stabil eingehalten wird. Wird festgestellt, dass die Halteposition nicht eingehalten ist, wird der Antriebsmotor wieder bestromt, um ein erneutes Festhalten bei Drehzahl Null herbeizuführen oder in eine sichere, nicht absturzgefährdete Position gefahren. In diesem Falle kann zudem eine Warnung zur Überprüfung und Instandsetzung der Bremse ausgegeben werden.

Die Erfindung wird im Folgenden unter Bezugnahme auf die beigefügten Abbildungen beschrieben, in denen:
- Fig. 1: den schematischen Aufbau eines Hubtors gemäß einer Ausführungsform der vorliegenden Erfindung zeigt,
- Fig. 2: ein schematisches Ablaufdiagramm zeigt, das den Betrieb des erfindungsgemäßen Hubtors von Fig. 1 illustriert,
- Fig. 3: ein schematisches Ablaufdiagramm zeigt, das den Betrieb des erfindungsgemäßen Hubtors von Fig. 1 im Falle eines Stromausfalls illustriert,
- Fig. 4: ein schematisches Ablaufdiagramm zeigt, das den Betrieb des erfindungsgemäßen Hubtors von Fig. 1 im Falle einer Not-Öffnung des Tores illustriert,
- Fig. 5: ein schematisches Ablaufdiagramm zeigt, das den Betrieb des erfindungsgemäßen Hubtors von Fig. 1 zur Überwachung der Akkurestladung illustriert, und
- Fig. 6:: ein schematisches Ablaufdiagramm zeigt, das den Betrieb des erfindungsgemäßen Hubtors von Fig. 1 zur permanenten Überwachung der Position und/oder Geschwindigkeit des Antriebsmotors bzw. des Torblatts illustriert.

### DETAILLIERTE BESCHREIBUNG DER BEVORZUGTEN AUSFÜHRUNGSFORMEN

In einem erfindungsgemäßen Antriebs- und Steuersystem für Hubtore wird die herkömmlicherweise verwendete Kombination aus einem Asynchronmotor mit einer Getriebeeinheit und einer mechanisch belasteten Bremse durch einen vorzugsweise als Synchronmotor ausgebildeten elektrischen Motor ersetzt, der wahlweise direkt, auch ohne aufwändiges Übersetzungsgetriebe mit dem Torblatt verbunden ist. Zur Ansteuerung des Motors ist eine Steuereinheit mit entsprechender Leistungsregeleinheit vorgesehen. Der Motor ist dabei sowohl dazu ausgelegt, das Torblatt im regulären Betrieb zu bewegen, als auch dazu, das Torblatt im Falle eines Not-Halts in kürzester Zeit abzubremsen und an der aktuellen Position zu halten.
Die Absturzgefahr durch Getriebebruch in herkömmlichen Antrieben wird dadurch ebenso eliminiert wie der zusätzliche Aufwand, der mit herkömmlichen Getriebebruchsicherungen verbunden ist.
Damit können auch verschleißanfällige Bremseinrichtungen in herkömmlichen Antrieben komplett entfallen oder durch konstruktiv weniger aufwändige oder leistungsärmere Bremsen ersetzt werden.
Ebenso kann das Halten des Tores in einer Position wahlweise ohne Zuhilfenahme von mechanischen Halteeinrichtungen erfolgen. Dies schließt nicht aus, dass nach dem zeitweiligen Halten durch den Motor später eine mechanische Halteeinrichtung eingreifen kann.

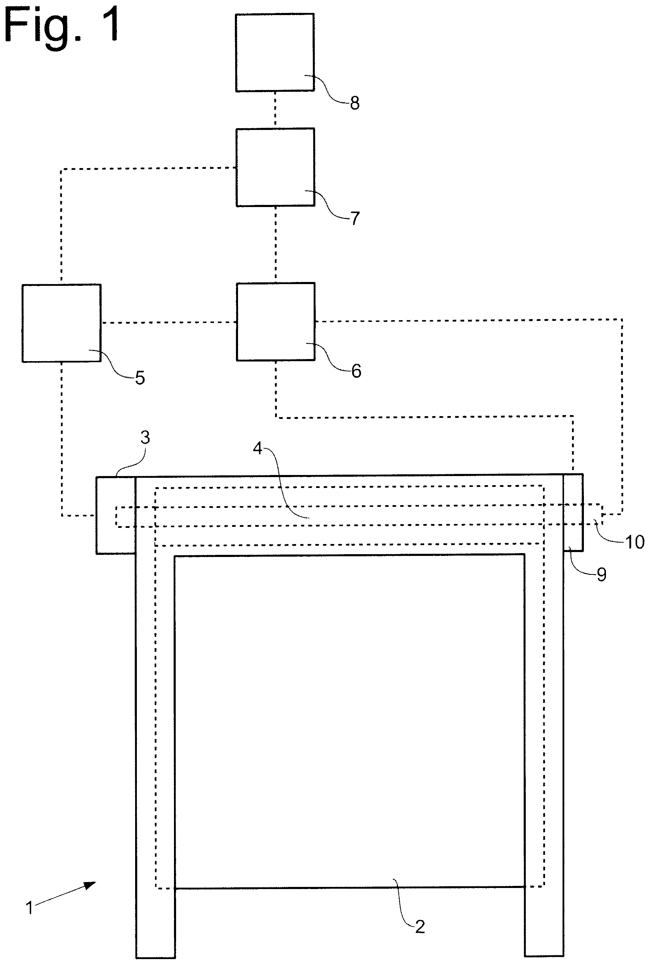

Fig. 1 ist eine schematische Darstellung eines Hubtors gemäß einer Ausführungsform der vorliegenden Erfindung. Dargestellt ist ein kraftbetätigtes Tor 1 mit einem vertikal bewegten, der Schwerkraft ausgesetzten Torblatt 2, das über einen Synchronmotor 3 und über eine Welle 4 auf und ab bewegt wird. Der Antrieb wird über eine Leistungsregeleinheit 5 betrieben, die es in beschriebener Art und Weise ermöglicht, den bestromten Stillstandsbetrieb des Motors durchzuführen.
Eine Logik- und Steuereinheit 6 generiert die Steuerbefehle für die Regeleinheit anhand von Befehlsgebersignalen und koordiniert die Funktionsweisen der Regeleinheit mit den weiteren Steuerungskomponenten.
Statt der hier dargestellten Welle 4 kann das Torblatt auch in separaten, an beiden Seiten des Torblatts vorgesehenen Spiralführungsbahnen aufgenommen werden, die hier nicht dargestellt sind, so dass eine klassische das Torblatt aufnehmende Wickelwelle entbehrlich sein kann.

Fig. 1 zeigt weiterhin eine Akkumulator-Einheit 7, in die rekuperierte Energie eingespeist werden kann. Des Weiteren kann die Akkumulator-Einheit zusätzlich über eine externe Stromversorgung 8 gespeist werden.

Fig. 1 zeigt weiterhin eine auf die Torantriebswelle wirkende elektromechanische Bremse 9 und ein Wegmesssystem 10 ausgeführt als Inkrementalgeber, Absolutwertgeber oder ähnlichem, der ebenfalls direkt auf der Welle sitzt, wobei idealerweise sowohl Bremse als auch Wegmesssystem im Antrieb integriert sein können.

Der Antrieb wird über eine Steuereinheit so angesteuert, dass seine Drehzahl (und damit die Geschwindigkeit des Torblattes) vorgegebenen Rampen folgt. Alle bewegten Teile unterliegen damit etwa gleichmäßigen Beschleunigungen. Die mechanischen Belastungen auf Wellen und Bremsen sowohl bei regulärem Torlauf, als auch bei Reversier- und Not-Halt- Vorgängen, aber auch bei Stromausfall werden somit vermindert.

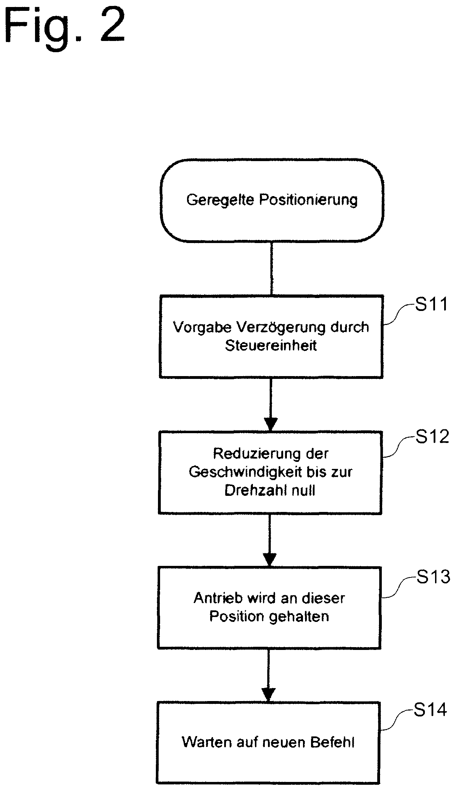

Fig. 2 zeigt ein schematisches Ablaufdiagramm, das den Betrieb des erfindungsgemäßen Hubtors von Fig. 1 illustriert. Im Falle der Anforderung eines Halts wird der Motor auf kurzem Wege geregelt, bis zur Drehzahl Null gefahren und in dieser Position gehalten.

Im Schritt S11 wird eine Verzögerung, mit der das Torblatt abgebremst werden soll, durch die Steuereinheit vorgegeben. Im Schritt S12 wird der Torblattantrieb auf Basis der vorgegebenen Verzögerung angesteuert, um die Geschwindigkeit bis zur Drehzahl Null zu reduzieren. Das Torblatt wird dann an der erreichten Position durch den Antrieb gehalten (Schritt S13). Die Steuereinheit warten dann im Schritt S14 auf neue Befehle.

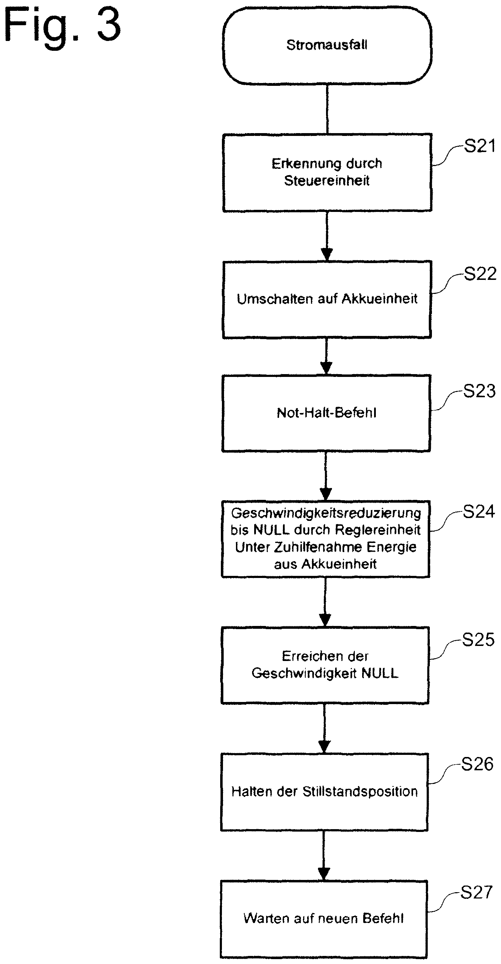

Fig. 3 zeigt ein schematisches Ablaufdiagramm, das den Betrieb des erfindungsgemäßen Hubtors von Fig. 1 im Falle eines Stromausfalls illustriert. Im Falle des Stromausfalles, wird dieser im Schritt S21 von der Steuereinheit erkannt und als (Not-)Haltbefehl interpretiert (Schritt S23). Die Steuereinheit kann dazu mit einer entsprechenden Überwachungseinrichtung ausgestattet sein, die die Hauptstromversorgung (z.B. Netzspannung) kontinuierlich überwacht und bei einem Ausfall oder einer Unterbrechung der Hauptstromversorgung auf eine Notstromversorgung (z. B. Akkumulatoreinheit umschaltet (Schritt S22). Die In der Akkumulatoreinheit bereitgehaltene elektrische Energie wird dann dazu benutzt, über die Regeleinheit den Antrieb über eine geführte Geschwindigkeitsreduzierung geregelt zum Stillstand (Drehzahl Null) zu bringen (Schritt S24). Sobald das Torblatt die Geschwindigkeit Null erreicht hat (Schritt S25) wird das Torblatt an der Stillstandsposition durch den bestromten Antrieb gehalten (Schritt S26). Danach wartet die Steuereinheit im Schritt S27 auf neue Befehle.

In der Ausführungsform gemäß Fig. 3 kann also trotz Stromausfall auf aufwändige mechanische Bremsen zur Vermeidung eines Torblattabsturzes verzichtet werden. Die Sicherheitsfunktionen werden durch die kontrollierte motorische Abbremsung des Torblatts mittels der in der Akkumulatoreinheit vorgehaltenen Energie übernommen.

Ein Ausfall der Sicherheitsfunktion aufgrund versagender mechanischer Bremsen kann damit ausgeschlossen werden.

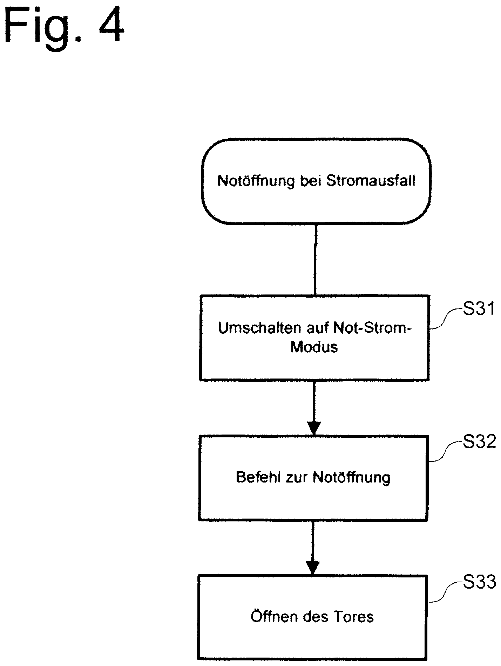

Fig. 4 zeigt ein schematisches Ablaufdiagramm, das den Betrieb des erfindungsgemäßen Hubtors von Fig. 1 zur Durchführung einer Notöffnung während eines Stromausfalls illustriert.

Die in der Akkumulatoreinheit gespeicherte Energie kann bei nicht vorhandener externer Stromversorgung genutzt werden, um über die Regeleinheit eine gesteuerte Not-Öffnung des Tores durchzuführen. Erkennt die Steuereinheit, dass keine externe Stromversorgung vorliegt, kann sie in einen sogenannten Not-Strom- Modus wechseln (Schritt S31). Dabei werden nicht benötigte Stromkreise zwecks Energieeinsparung abgeschaltet. Wenn im Schritt S32 ein Befehl zur Notöffnung empfangen wird, erfolgt im Schritt S33 die Öffnung des Tors. Die Steuereinheit und der Antriebsmotor werden dazu mit elektrischer Energie aus der Akkumulatoreinheit versorgt, wobei die zur Verfügung stehende Leistung durchaus geringer sein kann als die bei externer Netzspannungsversorgung.

Die Notfahrt-Geschwindigkeit wird entsprechend angepasst, so dass die Akkumulatorkapazität gering gehalten werden kann. Das Not-Strom-Programm kann sich der vorhandenen Restkapazität der Akkumulatoreinheit anpassen, so dass möglichst eine vollständige Öffnung des Tores erreicht wird.

Die Auslösung der Not-Öffnung kann über manuell ausgeführte Auslösetaste, durch eine angekoppelte Brandmeldeanlage oder automatisch bei Stromausfall erfolgen. Andere Auslöser sind denkbar.

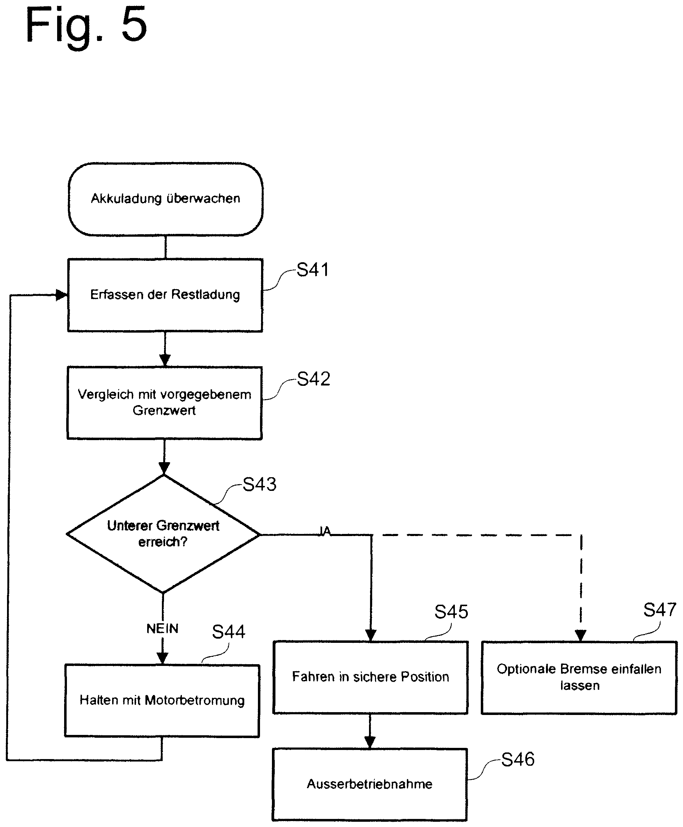

Fig. 5 zeigt ein schematisches Ablaufdiagramm, das den Betrieb des erfindungsgemäßen Hubtors von Fig. 1 zur Überwachung der Akkurestladung illustriert.

Wie bereits erwähnt, ist die Steuereinrichtung in günstiger Weise derart ausgebildet, dass sie die Akkurestladung überwachen und bei Unterschreitung einer vorgegebenen Untergrenze mit der verbleibenden Restenergie das Torblatt in eine sichere Position fahren kann. Dazu wird im Schritt S41 die in der Akkumulatoreinheit verbliebene Restladung erfasst und mit einem vorgegebenen unteren Grenzwert verglichen (Schritt S42). Solange der Grenzwert nicht erreicht ist, wird die Motorbestromung aufrecht erhalten und das Torblatt an der augenblicklichen Position gehalten (Schritt S44). Wenn jedoch der untere Grenzwert erreicht ist, wird das Torblatt im Schritt S45 in eine sichere Position gebracht. Konstruktionsabhängig kann dies eine vollständig geöffnete oder vollständig geschlossene Position sein. Anschließend wird das Hubtor solange in dieser Position außer Funktion gesetzt, bis die Stromversorgung wieder hergestellt ist (Schritt S46). Als weitere, optionale Maßnahme, um den Ausfall der Akkueinheit abzusichern, kann eine Haltebremse aktiviert werden (Schritt S47). Außerdem kann die Steuereinrichtung in günstiger Weise derart ausgebildet, dass sie über die Positionsdatenerfassung eine Bewegung des Torblatts detektiert werden kann, während die Haltebremse eine derartige Bewegung verhindern soll, und als Reaktion die Detektion einer derartigen Bewegung der Antriebsmotor mit Drehzahlen Null angesteuert, um das Torblatt zusätzlich motorisch festzuhalten. Des Weiteren kann die Steuereinheit dazu eingerichtet die Positionsdatenerfassung für einen Vergleich von Soll- und Ist-Geschwindigkeiten heranzuziehen und im Rahmen einer Regelungsschleife etwaige Abweichung zu korrigieren oder den Stillstand herbeizuführen. Gefahrbringenden Bewegung kann so entgegensteuert werden.

Die in der Akkumulatoreinheit bereitgestellt elektrische Energie kann auch dafür genutzt werden, die Positionsdatenerfassung der Steuereinheit auch bei Ausfall der externen Stromversorgung aufrecht zu erhalten Dadurch ist es auch im Not-Strom-Betrieb möglich, abwärts gerichtete gefahrbringende Bewegungen zu erkennen und der Bewegung entgegen zu steuern.

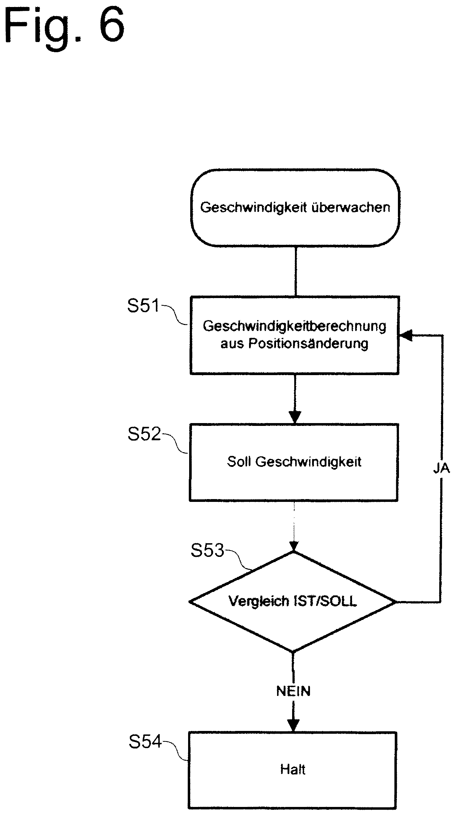

Fig. 6 zeigt ein schematisches Ablaufdiagramm, das den Betrieb des erfindungsgemäßen Hubtors von Fig. 1 zur permanenten Überwachung der Position und/oder Geschwindigkeit des Antriebsmotors bzw. des Torblatts illustriert.

Über die von den Positionssensoren erfasste Positionsänderung des Torblattes oder des Torblattantriebs kann im Schritt S51 die Geschwindigkeit des Torblattes ermittelt werden. Diese wird im Schritt S53 mit einer vorgegebenen Soll-Geschwindigkeit (Schritt S52) vergleichen. Bei einer Übereinstimmung der Ist- mit der Soll-Geschwindigkeit wird das Verfahren im Schritt S51 fortgesetzt. Bei einer Abweichung der Ist- von der Soll-Geschwindigkeit kann im Schritt S54 das Torblatt angehalten werden, bzw. ein im Zusammenhang mit Fig. 2 beschriebener Nothalt veranlasst werden. Durch die permanente Überwachung der Position und/oder Geschwindigkeit des Antriebsmotors bzw. des Torblatts kann so eine gefahrbringende Abwärtsbewegung erkannt und ihr entgegengesteuert werden. Die Sicherheit gegen Absturz wird dadurch erhöht.

Die vorliegende Erfindung stellt also eine Antriebseinheit für schnell laufende Hubtore zur Verfügung, in der ein bis auf Drehzahl Null herab regelbarer Antriebsmotor zur Bewegung des Torblattes vorgesehen ist. Der Antriebsmotor wird über eine Steuereinheit angesteuert. Beim Eintreten einer Nothaltbedingung wird der Antriebsmotor so angesteuert, dass seine Drehzahl kontrolliert auf Null reduziert wird und damit das Torblatt motorisch gebremst wird. Bei Stillstand des Torblattes wird das Torblatt durch den bei Drehzahl Null bestromten Antriebsmotor an der Halteposition gehalten. Mit einer Notstromversorgung wird sichergestellt, dass auch im Falle eines Stromausfalls eine motorische Abbremsung des Torblattes sowie eine Notöffnung erfolgen kann.

## Patentansprüche

1. Antriebs- und Steuersystem für ein Hubtor (1) mit einem vertikal bewegten Torblatt (2), umfassend:
einen mit dem Torblatt (2) verbindbaren Antriebsmotor (3), der dazu eingerichtet ist, das Torblatt (2) vertikal zu bewegen,
eine Steuereinheit (6) zur Ansteuerung des Antriebsmotors (3) und
eine Leistungsregeleinheit (5) zur Regelung des Antriebsmotors (3),
**dadurch gekennzeichnet, dass**
der Antriebsmotor (3) ein Synchronmotor ist, und bis auf Drehzahl Null herab regelbar ist,
die Steuereinheit (6) dazu eingerichtet ist, beim Eintreten einer Haltbedingung den Antriebsmotor (3) so anzusteuern, dass seine Drehzahl kontrolliert reduziert und damit das Torblatt (2) motorisch abgebremst wird, wobei der Antriebsmotor (3) dazu ausgelegt ist, bei Drehzahl Null ein ausreichendes Drehmoment zu liefern, um das Torblatt an einer augenblicklichen Position zu halten, und
wobei das Antriebs- und Steuersystem des Weiteren eine Akkumulatoreinheit umfasst, die dazu eingerichtet ist, den Antriebsmotor (3), die Steuereinheit (6) und die Leistungsregeleinheit (5) im Falle eines Stromausfalls mit elektrischer Energie zu versorgen, um die Funktion des geregelten Anhaltens und Haltens in Position zu gewährleisten.

2. Antriebs- und Steuersystem nach Anspruch 1, **dadurch gekennzeichnet, dass** die Akkumulatoreinheit mit aus dem Antriebsmotor beim generatorischen Betrieb rekuperierter Energie aufgeladen wird.

3. Antriebs- und Steuersystem nach einem der Ansprüche 1 oder 2, **dadurch gekennzeichnet, dass** die Steuereinheit einen Stromausfall erkennt und einen Notfall-Betrieb startet.

4. Antriebs- und Steuersystem nach einem der Ansprüche 1 bis 3, **dadurch gekennzeichnet, dass** das Antriebssystem mit einem Positionsgeber ausgestattet ist.

5. Antriebs- und Steuersystem nach Anspruch 4, **dadurch gekennzeichnet, dass** der Positionsgeber IstWerte der Position liefert, und dass die Steuereinheit bei gefahrbringenden Abweichungen zur vorgegeben Bewegungsgeschwindigkeit eine geregelte Bewegungsunterbrechung einleitet.

6. Antriebs- und Steuersystem nach Anspruch 1, **dadurch gekennzeichnet, dass** die Steuereinheit dazu eingerichtet ist, bei Erreichen einer vorgegebenen Untergrenze der Restladung der Akkumulatoreinheit das Torblatt über den Antriebsmotor in eine sichere, nicht absturzgefährdete Position zu bringen.

7. Antriebs- und Steuersystem nach Anspruch 1, **dadurch gekennzeichnet, dass** die Steuereinheit dazu eingerichtet ist, bei Erreichen einer vorgegebenen Untergrenze der Restladung der Akkumulatoreinheit das Torblatt durch Aktivieren einer Haltebremse redundant gegen Absturz abzusichern.

8. Antriebs- und Steuersystem nach Anspruch 7, **dadurch gekennzeichnet, dass** die Steuereinheit des Weiteren dazu eingerichtet ist, eine Halteposition bei aktivierter Haltebremse mittels der Positionsdaten zu überwachen und bei Abweichung eine Bestromung des Antriebsmotors zwecks Festhaltens in der aktuellen Position herbei zu führen.

9. Hubtor mit einem vertikal bewegbaren Torblatt (2) und einem Antriebs- und Steuersystem nach einem der Ansprüche 1 bis 8.

## Claims

1. Drive and control system for a lifting gate (1) with a vertically moved gate leaf (2), comprising:
a drive motor (3) connectable to said gate leaf (2) and adapted to vertically move said gate leaf (2),
a control unit (6) for actuating said drive motor (3), and
a power regulating unit (5) for regulating said drive motor (3),
**characterized in that**
said drive motor (3) is a synchronous motor and can be down-regulated up to zero rotational speed,
said control unit (6) is upon the occurrence of a stop condition adapted to actuate said drive motor (3) such that its rotational speed is reduced in a controlled manner and said gate leaf (2) is thereby braked in a motor-driven manner, wherein said drive motor (3) is configured to provide sufficient torque at zero rotational speed to hold said gate leaf at a current position, and
wherein said drive and control system further comprises an accumulator unit adapted to provide said drive motor (3), said control unit (6) and said power regulating unit (5) with electrical energy in the event of a power failure in order to ensure the operation of a regulated stop and holding in position.

2. Drive and control system according to claim 1, **characterized in that** said accumulator unit is charged with electrical energy recuperated from said drive motor during generator mode operation.

3. Drive and control system according to any one of claims 1 or 2, **characterized in that** said control unit detects a power failure and initiates an emergency stop operation.

4. Drive and control system according to any one of claims 1 to 3, **characterized in that** said drive system is equipped with a position sensor.

5. Drive and control system according to claim 4, **characterized in that** said position sensor delivers actual values of the position and that said control unit initiates a controlled motion interruption in the event of a hazardous deviation from the predetermined motion speed.

6. Drive and control system according to claim 1, **characterized in that** said control unit is adapted to bring said gate leaf via said drive motor into a secure and crash-safe position when a predetermined lower threshold value of residual charge of said accumulator unit is reached.

7. Drive and control system according to claim 1, **characterized in that** said control unit is adapted to secure said gate leaf redundantly against crashing by activating a holding brake when a predetermined lower threshold value of residual charge of said accumulator unit is reached.

8. Drive and control system according to claim 7, **characterized in that** said control unit is further adapted to monitor a holding position using said position data when said holding brake is activated and in the event of deviation, to energize said drive motor for the purpose of holding the current position.

9. Lifting gate with a vertically movable gate leaf (2) and a drive and control system according to any one of claims 1 to 8.

## Revendications

1. Système d'entraînement et de commande pour une porte relevable (1) avec un vantail de porte (2) déplacé verticalement, le système comprenant :
un moteur d'entraînement (3) pouvant être relié au vantail de porte (2) et qui est configuré pour déplacer verticalement le vantail de porte (2),
une unité de commande (6) pour assurer la commande du moteur d'entraînement (3), et
une unité de régulation de puissance (5) pour assurer la régulation du moteur d'entraînement (3),
**caractérisé en ce que**
le moteur d'entraînement (3) est un moteur synchrone et peut être régulé jusqu'à la vitesse de rotation nulle,
l'unité de commande (6) est configurée pour, dans le cas de l'apparition d'une condition d'arrêt, commander le moteur d'entraînement (3) de manière telle que sa vitesse de rotation soit diminuée de manière contrôlée en produisant ainsi le freinage-moteur du vantail de porte (2), le moteur d'entraînement (3) étant conçu pour fournir, dans le cas d'une vitesse de rotation nulle, un couple suffisant pour maintenir le vantail de porte dans une position instantanée actuelle, et
le système d'entraînement et de commande comprenant, en outre, une unité de batterie d'accumulateurs, qui est configurée pour alimenter en énergie électrique le moteur d'entraînement (3), l'unité de commande (6) et l'unité de régulation de puissance (5), dans le cas d'une coupure de courant, en vue de garantir la fonction de l'arrêt régulé et du maintien en position.

2. Système d'entraînement et de commande selon la revendication 1, **caractérisé en ce que** l'unité de batterie d'accumulateurs est chargée par de l'énergie récupérée en provenance du moteur d'entraînement fonctionnant en mode générateur.

3. Système d'entraînement et de commande selon l'une des revendications 1 ou 2, **caractérisé en ce que** l'unité de commande reconnaît une coupure de courant et démarre un fonctionnement d'urgence.

4. Système d'entraînement et de commande selon l'une des revendications 1 à 3, **caractérisé en ce que** le système d'entraînement est équipé d'un capteur de position.

5. Système d'entraînement et de commande selon la revendication 4, **caractérisé en ce que** le capteur de position fournit des valeurs réelles instantanées de la position, et **en ce que** l'unité de commande, dans le cas d'écarts constituant une source de danger par rapport à la vitesse de déplacement de consigne, amorce une interruption régulée du déplacement.

6. Système d'entraînement et de commande selon la revendication 1, **caractérisé en ce que** l'unité de commande est configurée pour, lorsque l'on atteint une limite inférieure prédéterminée de la charge restante de l'unité de batterie d'accumulateurs, amener le vantail de porte dans une position de sécurité, sans risque de chute de celui-ci, par l'intermédiaire du moteur d'entraînement.

7. Système d'entraînement et de commande selon la revendication 1, **caractérisé en ce que** l'unité de commande est configurée pour, lorsque l'on atteint une limite inférieure prédéterminée de la charge restante de l'unité de batterie d'accumulateurs, sécuriser le vantail de porte de manière redondante à l'encontre d'une chute, par l'activation d'un frein de maintien.

8. Système d'entraînement et de commande selon la revendication 7, **caractérisé en ce que** l'unité de commande est par ailleurs configurée pour assurer, au moyen des données de position, une surveillance d'une position d'arrêt lorsque le frein de maintien est activé, et dans le cas d'un écart, produire une alimentation en courant du moteur d'entraînement dans le but du maintien dans la position actuelle.

9. Porte relevable comportant un vantail de porte (2) déplaçable verticalement et un système d'entraînement et de commande selon l'une des revendications 1 à 8.
